# EUROPEAN PATENT SPECIFICATION

(11) **EP 2 867 313 B1**
(45) Date of publication and mention of the grant of the patent: **26.04.2017**
(21) Application number: 13810258.7
(22) Date of filing: 05.06.2013
(51) Int. Cl.: C09D 5/03, C08G 59/26, C08K 5/1575, C08L 67/00, C09D 5/26

(54) **A THERMOSET POWDER COATING COMPOSITION**
WÄRMEHÄRTENDE PULVERBESCHICHTUNGSZUSAMMENSETZUNG
COMPOSITION DE REVÊTEMENT À BASE DE POUDRE THERMODURCISSABLE

(30) Priority: 29.06.2012 SE 1200397
(43) Date of publication of application: 06.05.2015
(73) Proprietor: PERSTORP AB, 284 80 Perstorp (SE)
(72) Inventor: SÖRENSEN, Kent, S-284 35 Perstorp (SE); JAMES, David, S-22467 Lund (SE)
(74) Representative: Hoffmann Eitle
(86) International application number: PCT/SE2013/000094
(87) International publication number: WO 2014/003624

(56) References cited:
- EP-A1- 1 698 944
- WO-A1-2004/046245
- WO-A1-2010/125105
- WO-A2-2012/047420
- JP-A- S61 266 403
- US-A- 3 931 353

## Description

The present invention refers to a thermoset powder coating composition comprising at least one carboxyl functional polymer, such as a polyester, and at least one crosslinker selected from glycidyl ethers, particularly mono and diglycidyl ethers, of a 2,4,8,10-tetraoxaspiro-[5.5]undecane-3,9-dialkanol, most preferably 2,4,8,10-tetraoxaspiro[S.S]undecane-3,9--diethanol (pentaerythritol spiroglycol).

EP 1 698 944 A1 discloses a composition for powder coatings comprising a polyester resin. Further a polyepoxy resin, particularly a pentaerythritol polygycidyl ether, may be contained to apply cross-linking. The powder coating technology is a well-known and well defined art and has significant advantages over liquid coating technologies. The principle behind thermoset powder coatings is that the powder coating is formulated by dispersing pigments in a matrix of crosslinkable materials, grinding the materials to a powder, applying the powder to a surface and heating or baking to cause the powder particles to coalesce to form a layer on the surface or allowing curing or crosslinking to take place to form a thermoset layer.

A major challenge in the development of powder coatings is the need to satisfy a number of requirements that may be conflicting. One of the essential requirements of a powder coating is that it should be curable or crosslinkable, which typically involves incorporation of a crosslinking agent in an amount sufficient to ensure a durable coating after a relatively short period of baking to minimise energy costs. The crosslinking could, if the amount of crosslinker is high enough to induce a fast crosslinking, occur at too early a stage in the baking process, resulting in that the powder particles will not fully coalesce. Relatively high levels of crosslinker or a low crosslinking threshold will typically result in production and/or storage problems.

Thermosetting powder coatings, having for instance outstanding properties in exterior end applications, are typically based on polyester resins. Polyester powder coatings are typically formulated with epoxide, such as glycidyl, and/or β-hydroxyalkyl amide crosslinkers. The technology surrounding these materials is generally well known and has been discussed and disclosed in a number of articles, handbooks, such as "Powder Coating Chemistry and Technology", T.A. Misev, John Whiley & Sons, 1991 and patent publications.

Powder coating compositions comprising carboxyl terminated polyesters and triglycidyl isocyanurate (TGIC) as a crosslinker exhibit good results and have been found to provide a desired combination of high glass transition temperatures, good stability during storage and full coalescence of the particles. The use of TGIC is, however, now questioned, since the material has been found to be toxic and been classified accordingly to European Legislation as a Toxic, Irritant and Mutagenic Class 2 material.

Attempts have accordingly been made to replace TGIC with other crosslinking agents, such as acrylic copolymers having epoxide groups, glycidyl carboxylates and β-hydroxyalkyl amides, for carboxyl functional polyesters. A problem with β-hydroxyalkyl amides is that water is formed as the crosslinking mechanism is a condensation reaction. This water formation may result in surface defects. Glycidyl carboxylates, such as glycidyl esters of aromatic acids, are often liquid compound and can as such give rise to storage problems.

It has now quite unexpectedly been found that a glycidyl ether of a 2,4,8,10-tetra-oxaspiro[5.5]undecane-3,9-dialkanol is an excellent substitute for compounds such as TGIC. The present invention accordingly refers to a powder coating composition comprising at least one carboxyl functional polymer, such as an unsaturated or preferably a saturated carboxyl function polyester, and at least one glycidyl ether of a 2,4,8,10-tetraoxaspiro[5.5]undecane--3,9-dialkanol. Said glycidyl ether is a solid crystalline compound having a melting point suitable for powder coating formulations and is suitably present in an amount of 5-15%, such as 8-12%, by weight calculated on said carboxyl functional polymer.

The most preferred glycidyl ethers are glycidyl ethers of 2,4,8,10-tetraoxaspiro-[5.5]undecane-3,9-diethanol - also called pentaerythritol spiroglycol - of Formula I 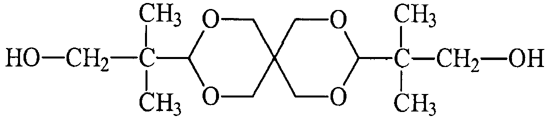 and the most preferred embodiment of said glycidyl ether is the 2,4,8,10-tetraoxaspiro-[5.5]undecane-3,9-diethanol (pentaerythritol spiroglycol) diglycidyl ether of Formula II

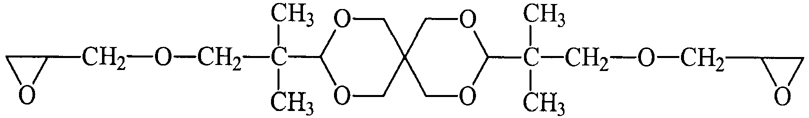

Said powder coating composition can in embodiments of the present invention further comprise at least one additional crosslinker, for instance at least one glycidyl ester or glycidyl ether, such as a di and triglycidyl carboxylate of an aromatic di or trifunctional acid, for example diglycidyl terephthalate, diglycidyl isophthalate, triglycidyl trimellitate, diglycidyl *p*-hydroxybenzoate, triglycidyl isocyanurate, and/or at least one β-hydroxyalkyl amide and/or, preferably in addition thereto, at least one dibasic aliphatic carboxylic acid, such as fumaric acid, succinic acid, adipic acid, azelaic acid, sebacic acid, dodecane dicarboxylic acid and the like, at least one acid anhydride, such as phthalic anhydride, trimellitic anhydride, pyromellitic anhydride and the like, at least one polyester resin and/or acrylic resin, at least one dicyandiamide or a derivative thereof, at least one imidazole or a derivative thereof, at least one amine compound, such as diaminophenyl methane, at least one cyclic amidine compound, at least one externally blocked isocyanate, such as a caprolactam or a methylketoxime blocked trimeric isophorone diisocyanate, at least one internally blocked isocyanate, such as a uretdione or the like. Said additional crosslinker is preferably a solid compound at room temperature.

The powder coating composition of the present invention suitably and additionally comprises at least one phase transfer catalyst, such as an alkyl triphenyl phosphonium halide as exemplified by for instance ethyl triphenyl phosphonium bromide, at least one flow, levelling and/or degassing agent for powder coatings and/or at least one pigment and/or any other additive known and used in the art.

A carboxylic functional polyester may be prepared by selecting the ratio of alcohols and carboxylic acids or anhydrides such that there is an excess of carboxylic acid or anhydride over alcohol thus yielding a polyester having terminal carboxylic acid and/or anhydride groups. A carboxylic functional polyester as used in the present invention has preferably an acid value of at least 15, such as 30-60 or 60-120, mg KOH/g. Said carboxylic functional polyester is suitably prepared from difunctional alcohols, dicarboxylic acids and/or corresponding anhydrides, and branching monomers, such as at least trifunctional alcohol and/or carboxylic acid. As is apparent to anyone skilled in the art, besides said polyester, also other resins may be present in the thermosetting powder coating composition of the present invention.

### Experimental

Powder coating formulations comprising below amounts (parts by weight) were prepared and evaluated.

| | Comparative | Embodiment |
|---|---|---|
| Uralac^{®} P-3486 *1 | 279.57 | 266.94 |
| Araldite^{®} PT 910 *2 | 40.43 | ---- |
| PSG-DGE *3 | ---- | 33.06 |
| Titanium dioxide | 90.00 | 90.00 |
| Resiflow^{®} PV5 *4 | 3.00 | 3.00 |
| Benzoin | 0.75 | 0.75 |
| Ethyl triphenyl phosphonium bromide | 4.50 | 4.50 |

| | | |
|---|---|---|
| *1 Saturated carboxyl functional polyester - DSM *2 Mixed glycidyl carboxylates of aromatic acids - Huntsman *3 Pentaerythritol diglycidyl ether - Perstorp Specialty Chemicals *4 Flow and levelling agent - Worlée | | |

Raw materials were premixed for 10 minutes and extruded at 300 rpm with temperature zones at cold, cold, 90°C and 110°C. Yielded extrudates were milled for 3 minutes at 20000 rpm and sieved in 80 µm sieve and subsequently applied on steel Q-panels using an electrostatic powder spray gun. Curing was performed at 180°C for 15 minutes followed by conditioning at 25°C and 50% relative humidity.

Following results were obtained at a filmthickness of 50-60 µm:

| | Comparative | Embodiment |
|---|---|---|
| Reverse impact, inch lbs | <10 | <10 |
| Gloss 60°, % | 70 | 96 |
| MEK-rubs, number | 120 | 115 |

## Claims

1. A powder coating composition comprising at least one carboxyl functional polymer and at least one crosslinker **characterised in, that** said at least one crosslinker is a mono or diglycidyl ether of a 2,4,8,10-tetraoxaspiro[5.5]undecane-3,9-dialkanol.

2. A powder coating composition according to Claim 1 **characterised in, that** said glycidyl ether is 2,4,8,10-tetraoxaspiro[5.5]undecane-3,9-diethanol mono or diglycidyl ether (pentaerythritol spiroglycol).

3. A powder coating composition according to Claim 1 or 2 **characterised in, that** said glycidyl ether is present in an amount of 5-15%, by weight calculated on said carboxyl functional polymer.

4. A powder coating composition according to Claim 1 or 2 **characterised in, that** said glycidyl ether is present in an amount 8-12%, by weight calculated on said carboxyl functional polymer.

5. A powder coating composition according to any of the Claims 1-4 **characterised in, that** said composition comprises at least one additional crosslinker.

6. A powder coating composition according to Claim 5 **characterised in, that** said additional crosslinker is a glycidyl ester, a glycidyl ether and/or a β-hydroxyalkyl amide.

7. A powder coating composition according to Claim 5 **characterised in, that** said additional crosslinker is a di or triglycidyl carboxylate of an aromatic di or trifunctional acid.

8. A powder coating composition according to Claim 5 **characterised in, that** said additional crosslinker is triglycidyl trimellitate and/or triglycidyl isocyanurate.

9. A powder coating composition according to any of the Claims 1 - 8 **characterised in, that** said carboxyl functional polymer is a saturated or unsaturated carboxyl functional polyester.

10. A powder coating composition according to any of the Claims 1-11 **characterised in, that** said composition additionally comprises at least one phase transfer catalyst.

11. A powder coating composition according to Claim 10 **characterised in, that** said phase transfer catalyst is at least one alkyl triphenyl phosphonium halide.

12. A powder coating composition according to any of the Claims 1-11 **characterised in, that** said composition additionally comprises at least one additional polymer, at least one flow, levelling and/or degassing agent for powder coatings and/or at least one pigment.

## Patentansprüche

1. Pulverbeschichtungszusammensetzung, umfassend mindestens ein Polymer mit Carboxylfunktion und mindestens einen Vernetzer, **dadurch gekennzeichnet, dass** der mindestens eine Vernetzer ein Mono- oder Diglycidylether eines 2,4,8,10-Tetraoxaspiro[5.5]undecan-3,9-dialkanols ist.

2. Pulverbeschichtungszusammensetzung gemäß Anspruch 1,
**dadurch gekennzeichnet, dass** der Glycidylether 2,4,8,10-Tetraoxaspiro[5.5]undecan-3,9-diethanolmonoether oder -diglycidylether (Pentaerythritolspiroglycol) ist.

3. Pulverbeschichtungszusammensetzung gemäß Anspruch 1 oder 2, **dadurch gekennzeichnet, dass** der Glycidylether in einer Menge von 5 bis 15 Gew-%, bezogen auf das Polymer mit Carboxylfunktion, vorliegt.

4. Pulverbeschichtungszusammensetzung gemäß Anspruch 1 oder 2, **dadurch gekennzeichnet, dass** der Glycidylether in einer Menge von 8 bis 12 Gew-%, bezogen auf das Polymer mit Carboxylfunktion, vorliegt.

5. Pulverbeschichtungszusammensetzung gemäß einem der Ansprüche 1 bis 4, **dadurch gekennzeichnet, dass** die Zusammensetzung mindestens einen zusätzlichen Vernetzer umfasst.

6. Pulverbeschichtungszusammensetzung gemäß Anspruch 5, **dadurch gekennzeichnet, dass** der zusätzliche Vernetzer ein Glycidylester, ein Glycidylether und/oder ein β-Hydroxyalkylamid ist.

7. Pulverbeschichtungszusammensetzung gemäß Anspruch 5, **dadurch gekennzeichnet, dass** der zusätzliche Vernetzer ein Di- oder Triglycidylcarboxylat einer aromatischen di- oder trifunktionellen Säure ist.

8. Pulverbeschichtungszusammensetzung gemäß Anspruch 5, **dadurch gekennzeichnet, dass** der zusätzliche Vernetzer Triglycidyltrimellitat und/oder Triglycidylisocyanurat ist.

9. Pulverbeschichtungszusammensetzung gemäß einem der Ansprüche 1 bis 8, **dadurch gekennzeichnet, dass** das Polymer mit Carboxylfunktion ein gesättigter oder ungesättigter Polyester mit Carboxylfunktion ist.

10. Pulverbeschichtungszusammensetzung gemäß einem der Ansprüche 1 bis 11, **dadurch gekennzeichnet, dass** die Zusammensetzung zusätzlich mindestens einen Phasentransferkatalysator umfasst.

11. Pulverbeschichtungszusammensetzung gemäß Anspruch 10, **dadurch gekennzeichnet, dass** der Phasentransferkatalysator mindestens ein Alkyltriphenylphosphoniumhalogenid ist.

12. Pulverbeschichtungszusammensetzung gemäß einem der Ansprüche 1 bis 11, **dadurch gekennzeichnet, dass** die Zusammensetzung zusätzlich mindestens ein zusätzliches Polymer, mindestens ein Strömungs-, Nivellier- und/oder Entgasungsmittel für Pulverbeschichtungen und/oder mindestens ein Pigment umfasst.

## Revendications

1. Composition de revêtement en poudre comprenant au moins un polymère à fonction carboxyle et au moins un réticulant, **caractérisée en ce que** ledit au moins un réticulant est un éther mono ou diglycidylique d'un 2,4,8,10-tetraoxaspiro[5.5]undécane-3,9-dialcanol.

2. Composition de revêtement en poudre selon la revendication 1, **caractérisée en ce que** ledit éther glycidylique est un éther mono ou diglycidylique de 2,4,8,10-tetraoxaspiro[5.5]undécane-3,9-diéthanol (pentaérythritol spiroglycol).

3. Composition de revêtement en poudre selon la revendication 1 ou 2, **caractérisée en ce que** ledit éther glycidylique est présent en une quantité de 5 à 15 %, en poids calculée par rapport audit polymère à fonction carboxyle.

4. Composition de revêtement en poudre selon la revendication 1 ou 2, **caractérisée en ce que** ledit éther glycidylique est présent en une quantité de 8 à 12 % en poids calculée par rapport audit polymère à fonction carboxyle.

5. Composition de revêtement en poudre selon les revendications 1 à 4, **caractérisée en ce que** ladite composition comprend au moins un réticulant additionnel.

6. Composition de revêtement en poudre selon la revendication 5, **caractérisée en ce que** ledit réticulant additionnel est un ester glycidylique, un éther glycidylique et/ou un β-hyroxyalkylamide.

7. Composition de revêtement en poudre selon la revendication 5, **caractérisée en ce que** le réticulant additionnel est un carboxylate di ou triglycidylique d'un acide aromatique di ou trifonctionnel.

8. Composition de revêtement en poudre selon la revendication 5, **caractérisée en ce que** ledit réticulant additionnel est un trimellitate triglycidylique et/ou un isocyanurate triglycidylique.

9. Composition de revêtement en poudre selon l'une quelconque des revendications 1 à 8, **caractérisée en ce que** ledit polymère à fonction carboxyle est un polyester à fonction carboxyle saturé ou insaturé.

10. Composition de revêtement en poudre selon l'une quelconque des revendications 1 à 11, **caractérisée en ce que** ladite composition comprend en outre au moins un catalyseur de transfert de phase.

11. Composition de revêtement en poudre selon la revendication 10, **caractérisée en ce que** ledit catalyseur de transfert de phase est au moins un halogénure d'alkyl triphényl phosphonium.

12. Composition de revêtement en poudre selon l'une quelconque des revendications 1 à 11, **caractérisée en ce que** ladite composition comprend en outre au moins un polymère additionnel, au moins un agent d'écoulement, de nivellement et/ou de dégazage pour revêtements en poudre et/ou au moins un pigment.
